# EUROPÄISCHE PATENTSCHRIFT

(11) **EP 3 474 303 B1**
(45) Veröffentlichungstag und Bekanntmachung des Hinweises auf die Patenterteilung: **17.05.2023**
(21) Anmeldenummer: 17201849.1
(22) Anmeldetag: 15.11.2017
(51) Int. Cl.: H01H 3/16, F16P 3/08, F16P 3/10, H01H 27/00

(54) **BETÄTIGER**
ACTUATOR
ACTIONNEUR

(30) Priorität: 18.10.2017 EP 17197168
(43) Veröffentlichungstag der Anmeldung: 24.04.2019
(73) Patentinhaber: EUCHNER GmbH + Co. KG, 70771 Leinfelden-Echterdingen (DE)
(72) Erfinder: Grimm, Ilo, 71111 Waldenbuch (DE)
(74) Vertreter: Ruckh, Rainer Gerhard

(56) Entgegenhaltungen:
- EP-A2- 0 367 026
- WO-A1-2015/155744
- US-A- 5 062 668

## Beschreibung

Die Erfindung betrifft einen Betätiger für einen Sicherheitsschalter.

Ein derartiger Betätiger bildet mit einem Sicherheitsschalter eine Sicherheitsschalteranordnung, die im Bereich der Sicherheitstechnik eingesetzt wird. Für den Einsatz im Bereich der Sicherheitstechnik, insbesondere im Bereich des Personenschutzes ist es erforderlich, dass die Sicherheitsschalteranordnung normative Anforderungen hinsichtlich deren Fehlersicherheit aufweist, so dass gewährleistet ist, dass mit der Sicherheitsschalteranordnung eine entsprechend sichere Überwachungsfunktion durchgeführt werden kann. Eine derartige Sicherheitsschalteranordnung kann typischerweise zur Sicherung des Zugangs zu einem Gefahrenbereich eingesetzt werden. Beispielsweise kann mit einer Sicherheitsschalteranordnung eine Verriegelung einer trennenden Schutzeinrichtung wie
einer Schutztür als Zugang zu einem Gefahrenbereich abgesichert werden. In diesem Fall wird beispielsweise der Betrieb einer gefahrbringenden Anlage innerhalb des Gefahrenbereichs nur dann freigegeben, wenn mit der Sicherheitsschalteranordnung die Schutztür verriegelt ist. Die Freigabe der Anlage kann über eine Sicherheitssteuerung erfolgen, welcher sicherheitsrelevante Schaltsignale der Sicherheitsschalteranordnung zugeführt sind.

Zur Verriegelung der Schutztür wird, wenn sich die Schutztür in ihrer Schließstellung befindet, der Betätiger in Form eines Riegels oder dergleichen in Eingriff mit dem Sicherheitsschalter gebracht, indem beispielsweise der Betätiger in eine Aussparung des Sicherheitsschalters eingefahren wird. Diese Verriegelung wird dadurch kontrolliert, dass mit einem RFID-Lesegerät im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Die WO 2015/155744 A1 betrifft einen Sicherheitsschalter mit einer zugeordneten Betätigungseinheit. Die Betätigungseinheit weist einen Zentrierbolzen auf, der in ein Zentrierloch des Sicherheitsschalters eingeführt werden kann, um eine präzise Ausrichtung der Betätigungseinheit relativ zum Sicherheitsschalter zu gewährleisten. Der Zentrierbolzen weist ein Kopfteil und ein anschließendes Verbindungselement zu Lagerung an einem Grundkörper auf. Das Kopfteil weist einen größeren Querschnitt als das Verbindungselement auf.

Die US 5,062,668 betrifft einen Sicherheitsschließmechanismus für eine Tür, der eine in einem Gehäuse integrierte Verschlusseinheit aufweist. Zur Verriegelung der Tür greift ein Rastbolzen von der Tür in eine Öffnung des Gehäuses. Um eine Ausrichtung der Tür relativ zur Verschlusseinheit zu ermöglichen, ist der Rastbolzen an der Türseite schwenkbar gelagert.

Der Erfindung liegt die Aufgabe zugrunde, einen Betätiger für eine Sicherheitsschalteranordnung bereitzustellen, der bei kleiner Baugröße eine zuverlässige Sicherungsfunktion ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Betätiger für einen Sicherheitsschalter mit einem Betätigerkopf, der mittels eines Verbindungselements an einem Grundkörper gelagert ist. Der Betätigerkopf weist wenigstens abschnittsweise einen größeren Querschnitt als das Verbindungselement auf. Das Verbindungselement ist in axialer Richtung steif. Der Betätigerkopf ist mittels des Verbindungselements in einer Grundstellung gehalten, in welcher die Längsachse des Verbindungselements in einem Neigungswinkel zur Oberfläche des Grundkörpers verläuft. Das Verbindungselement besteht aus einem elastisch verformbaren Material und ist bei äußeren Krafteinwirkungen quer zur Längsachse des Verbindungselements auslenkbar. Dadurch kann der Betätiger bei Heranführen an den Sicherheitsschalter auf eine Verriegelungseinheit des Sicherheitsschalters zentriert werden. Weiterhin bildet der Grundkörper eine Aufnahme aus, mittels derer der Betätiger in oder an einer Tür einbaubar ist. Alternativ ist der Grundkörper ist ein Nutenstein, welcher in einem Profil integrierbar ist.

Ein wesentlicher Vorteil besteht darin, dass der Betätiger eine kleine und kompakte Bauform aufweist.

Der Betätiger ist dabei einfach montierbar und kann flexibel in Kombination mit einem Sicherheitsschalter zur Ausbildung einer Sicherheitsschalteranordnung eingesetzt werden. Die so gebildete Sicherheitsschalteranordnung kann allgemein im Bereich der Sicherheitstechnik eingesetzt werden, insbesondere zur Sicherung des Zugangs an einem Gefahrenbereich.

Der Sicherheitsschalter weist dabei eine Verriegelungseinheit auf, mittels derer der Betätiger in eine Verriegelungsstellung verriegelbar, das heißt einrastbar ist.

Ein wesentlicher Aspekt der Erfindung besteht darin, dass durch die Ausbildung des Betätigers mit einem Betätigerkopf, der an einem Ende des Verbindungselements gelagert ist, auf sehr einfache Weise und gleichzeitig sichere und zuverlässige Verriegelung des Betätigers erreicht werden kann.

Das Verriegelungsprinzip ist dabei derart, dass die Verriegelungseinheit eine Anordnung von Verriegelungsbacken aufweist, die eine Einführöffnung begrenzen, über welche der Betätigerkopf in eine Verriegelungsstellung einbringbar ist.

Dabei ist der Betätigerkopf durch eine Auslenkbewegung auf die Einführöffnung selbsttätig ausrichtbar.

Dieses Verriegelungsprinzip wird dadurch ermöglicht, dass der Betätigerkopf des Betätigers einen größeren Querschnitt aufweist als das anschließende Verbindungselement. Somit können die Verriegelungsbacken der Verriegelungseinheit den Betätigerkopf hintergreifen und den Betätiger als Ganzes in seiner Verriegelungsstellung sicher halten, das heißt es wird eine formschlüssige Verriegelung des Betätigers erzielt. Der Betätigerkopf kann dabei eine kleine Bauform aufweisen, so dass auch der Platzbedarf für diesen Betätigerkopf im Bereich der Verriegelungseinheit gering gehalten werden kann. Damit kann nicht nur der Betätiger selbst, sondern auch der zugeordnete Sicherheitsschalter eine kleine, kompakte Bauform aufweisen.

Eine Verriegelung des Betätigers in der Verriegelungsstellung wird dadurch erreicht, dass die Verriegelungsbacken der Verriegelungseinheit jeweils mit einer Federeinheit federnd gehalten sind.

Die Verriegelungsbacken werden damit mit von den Federeinheiten ausgeübten Federkräften in ihrer Verriegelungsposition gehalten und sichern so den Betätigerkopf des in der Verriegelungsstellung angeordneten Betätigers.

Die Verriegelungsbacken der Verriegelungseinheit sind konzentrisch angeordnet, so dass deren freie Enden die Einführöffnung begrenzen. Um den Betätiger in die Verriegelungsstellung zu überführen wird der Betätigerkopf durch die Einführöffnung geschoben. Die Geometrie des Betätigerkopfes ist so angepasst, dass dessen Durchmesser etwas größer ist als der Durchmesser der Einführöffnung. Zum Überführen des Betätigers wird der Betätigerkopf mit Druck gegen die Einführöffnung geführt. Dadurch werden die Verriegelungsbacken gegen die Federkräfte der Federeinheit selbsttätig ausgelenkt, so dass der Betätigerkopf die Einführöffnung passieren kann. Ist der Betätiger dann in die Verriegelungsstellung eingefahren, liegt der Betätigerkopf hinter den Verriegelungsbacken, das heißt die Verriegelungsbacken sind durch die Federkräfte der Federeinheit zurück in ihre Verriegelungspositionen bewegt, hintergreifen den Betätigerkopf und verriegeln so den Betätiger in der Verriegelungsstellung und rasten ihn ein.

Wesentlich hierbei ist, dass der Durchmesser des an den Betätigerkopf anschließenden Verbindungselements kleiner ist als der Durchmesser und insbesondere auch kleiner oder gleich dem Durchmesser der Einführöffnung, so dass die Verriegelungsbacken vollständig in ihre Verriegelungsposition zurückfahren können.

Die so durchgeführte Verriegelung kann einfach und insbesondere ohne jegliche zusätzliche Stelleinheiten durchgeführt werden. Der Verriegelungsmechanismus kann somit mit einem äußerst geringen Aufwand realisiert werden.

Um diese Verriegelung zu ermöglichen, ist es lediglich erforderlich, dass das Verbindungselement in axialer Richtung eine hohe Steifigkeit aufweist, so dass dieses bei Andrücken des Betätigerkopfes an die Einführöffnung formstabil bleibt. Damit kann der Betätigerkopf mit der notwendigen Druckkraft auf die Einführöffnung unter Auslenkung der Verriegelungsbacken geführt werden, um den Betätiger in die Verriegelungsstellung zu überführen.

Weiterhin ist wesentlich, dass das Verbindungselement eine so große Steifigkeit aufweist, dass dieses den Betätigerkopf in einer definierten Grundstellung hält, unabhängig von der einwirkenden Schwerkraft. Diese Grundstellung ist durch ein in einem bestimmten Neigungswinkel zum Grundkörper des Betätigers verlaufenden Verbindungselement gegeben.

Durch diese definierte Grundstellung des Betätigerkopfes kann dieser definiert und gezielt der Einführöffnung der Verriegelungseinheit zugeführt werden, um den Betätiger in die Verriegelungsstellung einzuführen und mit der Verriegelungseinheit zu verriegeln.

Besonders vorteilhaft verläuft in der Grundstellung des Betätigers die Längsachse des Verbindungselements längs einer senkrecht zur Oberfläche des Grundkörpers orientierten Geraden.

Weiterhin ist auch durch Umkehren der Bewegung des Betätigers ein Entriegeln unter Last möglich, in dem der Betätigerkopf unter Auslenken der Verriegelungsbacken aus der Einführöffnung gezogen wird.

Das Verbindungselement des Betätigers weist zwar in axialer Richtung eine hohe Steifigkeit auf, ist jedoch bei äußeren Krafteinwirkungen quer zur Längsachse des Verbindungselements auslenkbar.

Dies wird dadurch erreicht, dass das Verbindungselement aus einem elastisch verformbaren Material besteht.

Somit weist das Verbindungselement eine gewisse Flexibilität auf, die Auslenkungen quer mit dessen Längsachse zulassen. Das Verbindungselement kann hierbei aus einem Kunststoff oder auch aus einem metallischen Werkstoff bestehen. Besonders vorteilhaft ist das Verbindungselement von einem Stahlseil gebildet.

Durch diese Flexibilität des Verbindungselements kann der Betätiger bei Heranführen an den Sicherheitsschalter selbsttätig auf die Verriegelungseinheit zentriert werden, wodurch auch bei nicht exakt zueinander ausgerichtetem Sicherheitsschalter und Betätiger eine sichere zuverlässige Funktion der Sicherheitsschalteranordnung gewährleistet ist.

Bei einer Verriegelungseinheit in Form konzentrisch angeordneter, eine Einführöffnung begrenzender Verriegelungsbacken muss der Betätiger nicht exakt auf die Verriegelungseinheit ausgerichtet sein, da bei einer geringen Fehlausrichtung der Betätigerkopf auf den Rand wenigstens einer Verriegelungsbacke trifft. Die dabei auf den Betätigerkopf ausgeübte Kraft lenkt das Verbindungselement aus und zentriert den Betätigerkopf selbsttätig auf die Einführöffnung.

Der erfindungsgemäße Betätiger kann in unterschiedlichen Geometrien ausgebildet sein.

Vorteilhaft weist das Verbindungselement des Betätigers einen über seine gesamte Länge zumindest näherungsweise konstanten Querschnitt auf.

Das Verbindungselement bildet somit ein dünnes, langgestrecktes Element, an dessen vorderen freien Ende der Betätigerkopf anschließt, der generell eine größere Breite als das Verbindungselement aufweist. Der Betätigerkopf kann dabei prinzipiell einen ovalen, polygonalen Querschnitt oder dergleichen aufweisen.

Besonders vorteilhaft ist der Betätigerkopf ein rotationssymmetrisch zur Längsachse des Verbindungselements ausgebildeter Körper, wobei insbesondere der Betätigerkopf kugelförmig ausgebildet ist.

Die rotationssymmetrische Ausbildung des Betätigerkopfes ist insbesondere dann vorteilhaft, wenn die Verriegelungseinheit eine Anordnung von konzentrischen Verriegelungsbacken aufweist, die die Einführung begrenzen. Die rotationssymmetrische Form des Betätigerkopfes stellt daher eine geometrische optimierte Anpassung an die Verriegelungseinheit dar, die eine gleichmäßige Kraftverteilung des Betätigerkopfes auf die Verriegelungsbacken bei Passieren der Einführöffnung gewährleistet, wodurch insbesondere eine kontrollierte Einführung des Betätigers in die Verriegelungsstellung gewährleistet ist.

Gemäß einer besonders einfachen Ausgestaltung ist der Betätigerkopf in Form eines Blechs, insbesondere eines gecrimpten Blechs, ausgebildet.

Besonders vorteilhaft kann die Länge des Verbindungselements eingestellt werden, wodurch auf einfache Weise eine Anpassung des Betätigers an unterschiedlich ausgebildete Sicherheitsschalter und deren Verriegelungseinheit möglich ist. Die Einstellung kann beispielsweise dadurch erfolgen, dass im Grundkörper des Betätigers eine Führung für das Verbindungselement vorgesehen ist. Dann kann jeweils das Verbindungselement unterschiedlich weit in die Führung eingeführt und dort fixiert werden, wodurch die Länge des über den Grundkörper hervorstehenden Teils des Verbindungselements eingestellt werden kann.

Gemäß einer Variante der Erfindung bildet der Grundkörper des Betätigers eine Aufnahme aus, mittels derer der Betätiger in einer Tür einbaubar ist.

Diese Ausführungsform ist für eine Sicherheitsschalteranordnung optimal angepasst, welche einen mit einer Tür verschließbaren Zugang zu einem Gefahrenbereich überwacht, wobei insbesondere die Tür als Schutztür ausgebildet ist.

Da der Grundkörper des Betätigers so ausgebildet ist, dass dieser direkt in die Tür integriert werden kann, entfallen aufwändige separate Befestigungsmittel, um den Betätiger mit der Tür zu verbinden. Diese Ausführungsform eignet sich besonders für kleinere Türen mit geringerer Wandstärke wie zum Beispiel Glastüren und Blechtüren.

Besonders vorteilhaft weist der Grundkörper zwei durch ein zylindrisches Segment verbundene kreisscheibenförmige Segmente auf, welche über das zylindrische Segment hervorstehen. Generell können die Segmente auch andere Geometrien aufweisen.

Der so ausgebildete Grundkörper bildet ein Rastmittel aus, das in eine Aussparung in der Tür eingebracht werden kann.

Gemäß einer zweckmäßigen Weiterbildung steht das Verbindungselement mit dem Betätigerkopf von einer ersten Stirnseite des Grundkörpers hervor, und an der gegenüberliegenden Stirnseite des Grundkörpers ist ein Griffelement angeordnet.

Durch die Integration des Griffelements im Betätiger braucht an der Tür keine separate Konstruktion zur Anbringung eines Griffs vorgesehen werden, wodurch die Konstruktion der Tür vereinfacht werden kann.

Diese Konstruktion kann dahingehend modifiziert werden, dass der Grundkörper eine Aufnahme für ein separates Griffelement bildet.

Gemäß einer weiteren Variante der Erfindung ist der Grundkörper des Betätigers ein Nutenstein.

Mit dieser Ausbildung des Betätigers können Applikationen abgedeckt werden, bei welchen der Betätiger in einem Profil integriert werden soll. Durch die Ausbildung des Betätigerkopfes in Form des Nutensteins kann der Betätiger direkt im Profil integriert werden.

Gemäß einer vorteilhaften Ausgestaltung der Sicherheitsschalteranordnung weist der Sicherheitsschalter eine der Verriegelungseinheit zugeordneten Zuhalteeinheit auf, mittels derer eine Zuhaltung für den Betätiger in der Verriegelungsstellung bewirkt ist.

Durch diese Zuhaltung wird der Betätiger sicher im verriegelten Zustand gehalten.

Weiter vorteilhaft ist die Verriegelungsstellung des Betätigers dadurch überwacht, dass Signale eines Transponders im Betätiger in einer Leseeinheit des Sicherheitsschalters erfasst werden. Der Transponder kann dabei im Betätigerkopf oder auch im Grundkörper integriert sein.

Durch diese Überwachungsfunktion können Fehler bei der Verriegelung des Betätigers aufgedeckt werden. Dies stellt eine wesentliche Maßnahme zur Erfüllung des für den Einsatz der Sicherheitsschalteranordnung im Bereich der Sicherheitstechnik geforderten Sicherheitsniveaus dar.

Die Erfindung wird im Folgenden anhand der Zeichnungen erläutert. Es zeigen:
- Figur 1: Ausführungsbeispiel der erfindungsgemäßen Sicherheitsschalteranordnung mit einem Sicherheitsschalter und einem Betätiger.
- Figur 2: Längsschnittdarstellung des Betätigers der Sicherheitsschalteranordnung gemäß Figur 1.
- Figur 3: Längsschnittdarstellung des Sicherheitsschalters gemäß Figur 1.
- Figur 4: Darstellung eines Ausschnitts des Sicherheitsschalters gemäß Figur 1 mit den Komponenten einer Verriegelungseinheit und einer Zuhalteeinheit
a) bei deaktivierter Zuhaltung
b) bei aktivierter Zuhaltung
- Figur 5 a - c: Unterschiedliche Zustände der Verriegelungseinheit und Zuhalteeinheit bei Einführen des Betätigers in eine Verriegelungsstellung.
- Figur 6: Weiteres Ausführungsbeispiel des Betätigers.
- Figur 7: Variante der Ausführungsform gemäß Figur 6.
- Figur 8: Weiteres Ausführungsbeispiel des Betätigers.
- Figur 9: Integration des Betätigers in einem Profil:
a) ohne Profilnutabdeckung
b) mit Profilnutabdeckung

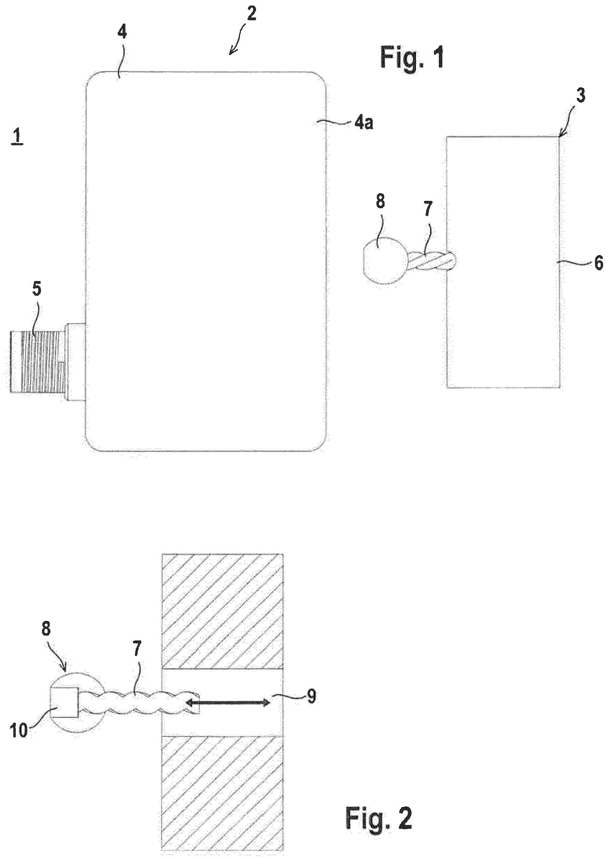

Figur 1 zeigt schematisch ein Ausführungsbeispiel einer Sicherheitsschalteranordnung 1 mit einem Sicherheitsschalter 2 und einem Betätiger 3.

Mit dieser Sicherheitsschalteranordnung 1 erfolgt beispielsweise die Sicherung einer Schutztür als Zugang zu einem Gefahrenbereich. Der Betätiger 3 kann an der Schutztür angeordnet sein, der Sicherheitsschalter 2 kann an einen die Türöffnung, die mit der Schutztür verschlossen wird, begrenzenden Rahmen angeordnet werden.

Die Komponenten des Sicherheitsschalters 2 sind in einem Gehäuse 4 integriert, an dem ein Kabelanschluss 5 zum Anschluss an externe Einheiten ausmündet.

Wie aus Figur 1 und insbesondere aus Figur 2 ersichtlich, weist der Betätiger 3 einen Grundkörper 6 auf, in welchem ein Verbindungselement 7 gelagert ist. Das Verbindungselement 7 ist von einem langgestreckten Körper gebildet, dessen Querschnitt über seine gesamte Länge zumindest näherungsweise konstant ist.

Das Verbindungselement 7 ist mit seinem ersten freien Ende so im Grundkörper 6 gelagert, dass die Längsachse des Verbindungselements 7 senkrecht zur Oberfläche des Grundkörpers 6 orientiert ist. Am anderen Ende des Verbindungselements 7 ist ein Betätigerkopf 8 gelagert. Der Betätigerkopf 8 ist im vorliegenden Fall kugelförmig ausgebildet. Prinzipiell kann der Betätigerkopf 8 auch von einem anderen rotationssymmetrischen Körper gebildet sein. Prinzipiell kann der Betätigerkopf 8 auch einen polygonalen Querschnitt aufweisen. In jedem Fall weist der Betätigerkopf 8 eine größere Querschnittsfläche als das Verbindungselement 7 auf, so dass der Betätigerkopf 8 in seiner gesamten Querschnittsebene über das Verbindungselement 7 hervorsteht.

Das Verbindungselement 7 kann prinzipiell aus Kunststoff oder aus einem metallischen Werkstoff bestehen. Im vorliegenden Fall besteht das Verbindungselement 7 aus einem kurzen Stahlseil.

Allgemein besteht das Verbindungselement 7 aus einem Werkstoff, der eine hohe Steifigkeit des Verbindungselements 7 in axialer Richtung gewährleistet und der das Verbindungselement 7 in der in den Figuren 1 und 2 dargestellten Grundstellung, insbesondere bei Einwirken der Schwerkraft hält. Gleichzeitig weist das Verbindungselement 7 eine Flexibilität, das heißt elastische Verformbarkeit derart auf, dass es unter Krafteinwirkung so verformt werden kann, dass der Betätigerkopf 8 in einer Ebene quer zur Längsachse ausgelenkt werden kann.

Wie in Figur 2 mit dem Doppelpfeil aufgezeigt, ist das Verbindungselement 7 in einer Führung 9 des Grundkörpers 6 so gelagert, dass es aus dem Grundkörper 6 herausgeführt oder eingeführt, insbesondere herausgezogen oder eingeschoben werden kann, so dass die Länge des über dem Grundkörper 6 hervorstehenden Teils des Verbindungselements 7 variiert werden kann. In jeder Position kann das Verbindungselement 7 fixiert werden.

Wie aus Figur 2 weiter ersichtlich, ist im Betätigerkopf 8 ein Transponder 10 gelagert. Alternativ könnte der Transponder 10 im Grundkörper 6 gelagert werden.

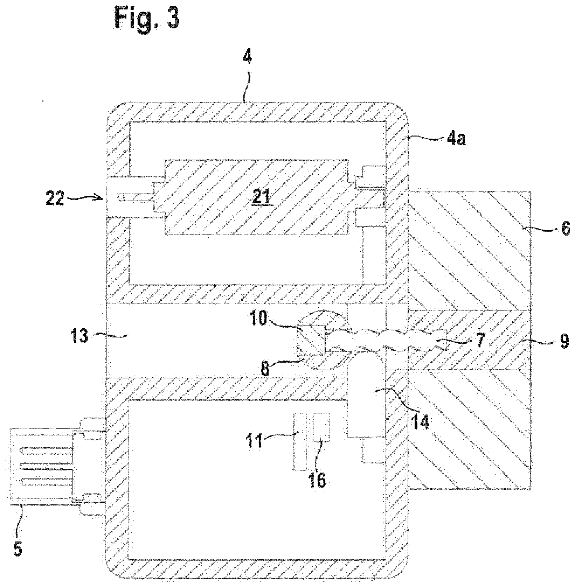

Wie Figur 3 zeigt, ist im Sicherheitsschalter 2 eine Leseeinheit in Form einer Lesespule 11 angeordnet. Mit der Lesespule 11 können Signale des Transponders 10 im Betätigerkopf 8 erfasst werden, wenn der Betätiger 3 in eine Verriegelungsstellung im Sicherheitsschalter 2 eingefahren ist, wie Figur 3 weiterhin zeigt.

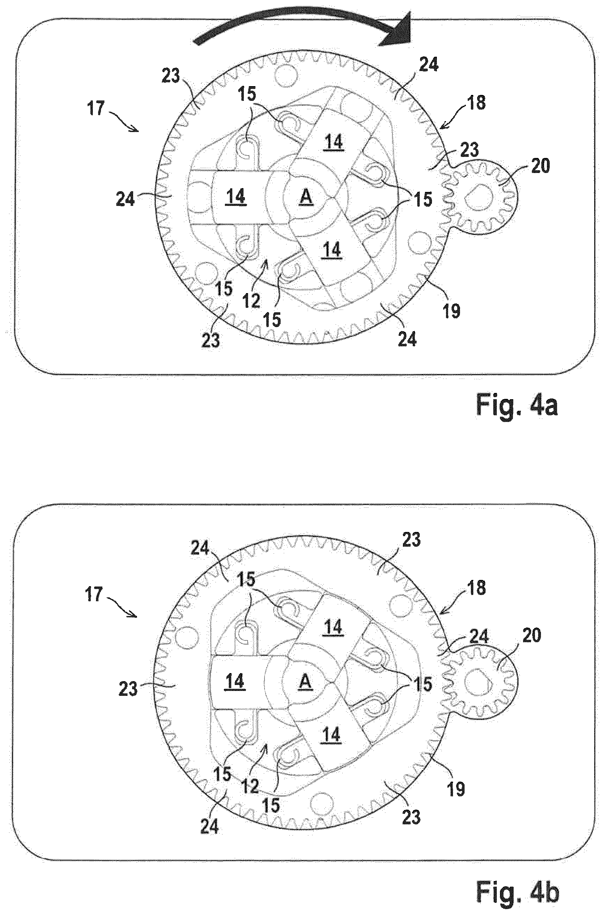

Zur sicheren Verriegelung des Betätigers 3 in seiner Verriegelungsstellung weist der Sicherheitsschalter 2 eine Verriegelungseinheit 12 auf, deren Komponenten in einer Draufsicht in den Figuren 4a, b dargestellt sind. Die Verriegelungseinheit 12 befindet sich im Bereich hinter der Frontwand 4a des Gehäuses 4 des Sicherheitsschalters 2.

In der Verriegelungsstellung des Betätigers 3 liegt der Betätigerkopf 8 in einem Führungskanal 13 im Sicherheitsschalter 2. Die Komponenten der Verriegelungseinheit 12 hintergreifen dabei den Betätigerkopf 8 und verriegeln so den Betätiger 3, das heißt der Betätiger 3 ist gegen ein Herauslösen aus dem Sicherheitsschalter 2 gesichert.

Die Verriegelungseinheit 12 weist im vorliegenden Fall drei identisch ausgebildete Verriegelungsbacken 14 auf, die konzentrisch so angeordnet sind, dass deren erste freie Enden eine Einführöffnung A begrenzen. Die Längsachsen der Verriegelungsbacken 14 verlaufen in radialer Richtung. Die Verlängerungen dieser Längsachsen schneiden sich im Zentrum der Einführöffnung A. Jeder Verriegelungsbacke 14 ist mittels einer Federeinheit 15, die im vorliegenden Fall von einer einzelnen Feder gebildet ist, federnd gelagert. Die Federkräfte halten die Verriegelungsbacken 14 in ihrer Verriegelungsposition, die in den Figuren 4a, b dargestellt sind.

Die Verriegelungsbacken 14 sind rotationssymmetrisch jeweils um 120° versetzt zueinander angeordnet. Die Verriegelungspositionen der Verriegelungsbacken 14 werden jeweils mit einer Reflexionslichtschranke 16 überwacht.

Der Verriegelungseinheit 12 ist eine Zuhalteeinheit 17 zugeordnet. Die Zuhalteeinheit 17 weist eine scheibenförmige Kulisse 18 auf. Die Außenkontur der Kulisse 18 weist eine Zahnung 19 auf, die in Eingriff mit einem Zahnrad 20 ist. Das Zahnrad 20 kann mittels eines elektrischen Antriebs in Form eines Elektromotors 21 in eine Drehbewegung versetzt werden, wodurch sich auch die Kulisse 18 um eine senkrecht zur Scheibenachse verlaufenden Drehachse dreht.

Dem Elektromotor 21 ist eine mechanische Hilfsentriegelung 22 zugeordnet. Beispielsweise im stromlosen Zustand des Sicherheitsschalters 2 kann der durch Betätigen der Hilfsentriegelung 22, beispielsweise mit einem Schraubendreher, der Elektromotor 21 und damit die Kulisse 18 mechanisch weitergedreht werden.

Die Kulisse 18 weist einen zentralen Hohlraum auf, in welchem die Verriegelungsbacken 14 der Verriegelungseinheit 12 angeordnet sind. Der Hohlraum wird von einem eine Innenkontur bildenden Wandsegment der Kulisse 18 begrenzt.

Die Symmetrie der Innenkontur ist an die Symmetrie der Verriegelungsbacken 14 angepasst. Die Innenkontur weist dementsprechend drei identisch ausgebildete, um 120° gedrehte Segmente 23 auf, die zur Zuhaltung der Verriegelungsbacken 14 dienen. Jeweils zwei benachbarte Segmente 23 sind durch ein Zwischensegment 24 der Innenkontur verbunden. Auch die Zwischensegmente 24 sind identisch ausgebildet.

Figur 4a zeigt die Zuhalteeinheit 17 bei deaktivierter Zuhaltung. Hier ist die Kulisse 18 mittels des Elektromotors 21 in eine Drehstellung gedreht, in der die Zwischensegmente 24 im Bereich der Verriegelungsbacken 14 liegen. Die Zwischensegmente 24 sind so ausgebildet, dass diese in Abstand zu den hinteren, zweiten freien Enden liegen. Dadurch können die Verriegelungsbacken 14 gegen die Federkräfte der Federeinheit 15 aus ihren Verriegelungspositionen heraus ausgelenkt werden und in Richtung der Zwischensegmente 24 bewegt werden.

Figur 4b zeigt die Zuhalteeinheit 17 bei aktivierter Zuhaltung. Hier ist die Kulisse 18 mittels des Elektromotors 21 in eine Drehstellung gedreht, in der die Segmente 23 der Innenkontur im Bereich der Verriegelungsbacken 14 liegen. Die Segmente 23 der Innenkontur liegen dicht an den Verriegelungsbacken 14 an, so dass eine Bewegung der Verriegelungsbacken 14 aus den Verriegelungspositionen blockiert ist, wodurch eine Zuhaltung bewirkt ist.

Die Überführung zum Zustand einer deaktivierten Zuhaltung (Figur 4a) in den Zustand einer aktivierten Zuhaltung (Figur 4b) wird dadurch bewirkt, dass die Kulisse 18 in der in Figur 4a dargestellten Richtung um 60° weiter gedreht wird. Durch ein weiteres Drehen der Kulisse 18 um 60° wird dann wieder ein Zustand mit deaktivierter Zuhaltung erhalten und so weiter.

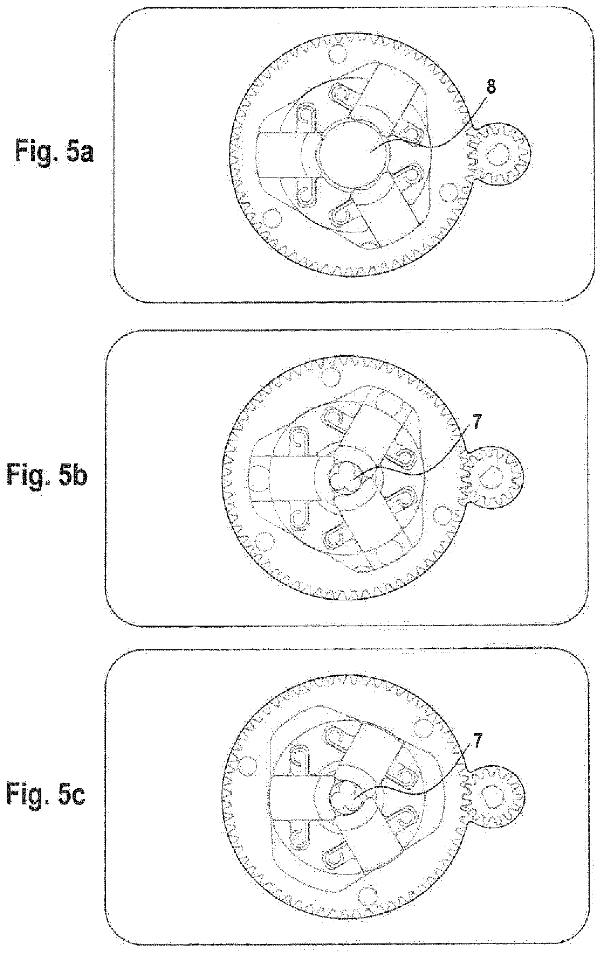

Die Funktionsweise der Verriegelung und Zuhaltung der Sicherheitsschalteranordnung 1 wird anhand der Figuren 5a - c erläutert.

Im Ausgangszustand, beispielsweise bei geöffneter Schutztür liegt der Betätiger 3 in Abstand zur Schutztür. Bei Schließen der Schutztür wird der Betätiger 3 in eine Verriegelungsstellung im Sicherheitsschalter 2 eingefahren.

Zunächst wird hierzu der Betätigerkopf 8 gegen die Einführöffnung A geführt. Da der Betätigerkopf 8 durch die elastische Verformbarkeit des Verbindungselements 7 quer zur Längsachse des Verbindungselements 7 angeordnet werden kann, erfolgt eine Selbstzentrierung des Betätigerkopfes 8 auf die Einführöffnung A. Der Durchmesser des Betätigerkopfes 8 ist größer als der Durchmesser der Einführöffnung A. Daher werden bei Führen des Betätigerkopfes 8 gegen die Einführöffnung A durch vom Betätigerkopf 8 auf die Verriegelungsbacken 14 ausgeübten Druckkräfte ein Auslenken der Verriegelungsbacken 14 aus ihrer Verriegelungsposition heraus bewirkt. Dies ist möglich, da die Zuhaltung der Zuhalteeinheit 17 deaktiviert ist, das heißt die Zwischensegmente 24 liegen im Bereich der Verriegelungsbacken 14. Diese Situation ist in Figur 5a dargestellt. Der Betätigerkopf 8 liegt im Bereich der aufgeweiteten Einführöffnung A. Die Verriegelungsbacken 14 sind aus ihren Verriegelungspositionen durch den Betätigerkopf 8 nach hinten verschoben und liegen an den Zwischensegmenten 24 an.

Darauf wird der Betätiger 3 weiter in den Sicherheitsschalter 2 eingeführt, bis er in der in Figur 3 dargestellten Verriegelungsstellung liegt. In dieser Verriegelungsstellung hat der Betätigerkopf 8 die Verriegelungsbacken 14 passiert. Damit werden die Verriegelungsbacken 14 durch die Federkräfte in ihre Verriegelungsposition zurückgeführt, so dass deren freie Enden mit wenig Spiel am Verbindungselement 7 des Betätigers 3 anliegen. Die Verriegelungsbacken 14 hintergreifen dann den Betätigerkopf 8, wobei durch die Federkräfte, die die Verriegelungsbacken 14 in ihren Verriegelungspositionen halten, der Betätiger 3 sicher verriegelt ist. Dabei ist zunächst noch die Zuhaltung deaktiviert. Dieser Zustand ist in Figur 5b dargestellt. In diesem Zustand kann noch eine Entriegelung des Betätigers unter Last erfolgen, da der Betätiger 3 mit Zugkraft aus der Verriegelungseinheit 12 herausgezogen werden kann.

Anschließend wird, wie in Figur 5c dargestellt, die Zuhaltung aktiviert, so dass die Kulisse 18 gegen eine Entriegelung gedreht ist.

Bei einer Sicherung einer Schutztür als Zugang zu einem Gefahrenbereich mittels der erfindungsgemäßen Sicherheitsschalteranordnung 1 kann der Sicherheitsschalter 2 dann, wenn eine Verriegelung und Zuhaltung des Betätigers 3 gegeben ist, ein Schaltsignal ausgeben, das zur Freigabe des Betriebes einer gefahrbringenden Anlage im Gefahrenbereich genutzt werden kann.

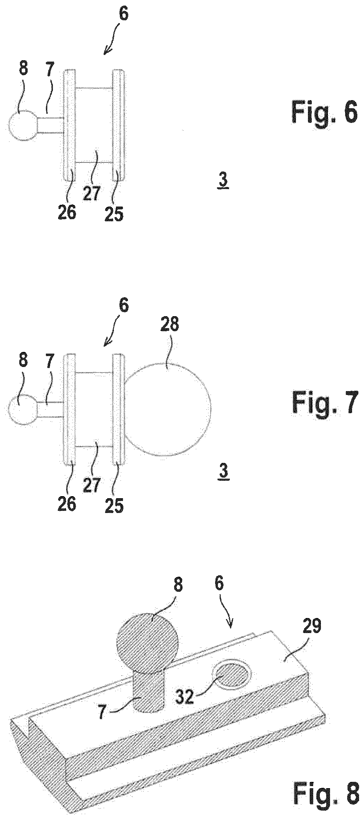

Figur 6 zeigt eine weitere Ausführungsform des erfindungsgemäßen Betätigers 3. Der Betätiger 3 weist wieder einen Grundkörper 6, ein Verbindungselement 7 sowie einen kugelförmigen Betätigerkopf 8 auf. Ein nicht dargestellter Transponder kann im Betätigerkopf 8 oder Grundkörper 6 angeordnet sein.

Das Verbindungselement 7 steht senkrecht von der Oberfläche des Grundkörpers 6 hervor und weist die Form eines Zylinders auf. Generell kann das Verbindungselement 7 andere Formen aufweisen. Beispielsweise kann das Verbindungselement 7 von einem Stahlseil gebildet sein.

Der Grundkörper 6 ist in Form einer Aufnahme ausgebildet, die durch in eine Aussparung einer Tür insbesondere einer Schutztür eingesetzt, insbesondere eingerastet werden kann, wobei im letzteren Fall der Grundkörper 6 elastisch verformbar ist, was jedoch nicht zwingend ist.

Der Grundkörper 6 besteht aus zwei kreisscheibenförmigen Segmenten 25, 26, die durch ein zylindrisches Segment 27 getrennt sind. Die Symmetrieachsen dieser Segmente fallen mit den Längsachsen des Verbindungselements 7 zusammen. Die Durchmesser der kreisscheibenförmigen Segmente 25, 26 sind größer als der Durchmesser des zylindrischen Segments 27. Generell können die Segmente 25, 26, 27 auch andere Geometrien aufweisen.

Die Befestigung dieses Betätigers 3 in einer Aussparung der Tür erfolgt derart, dass der die Aussparung begrenzende Rand der Tür an dem zylindrischen Segment 27 dicht anliegt. Die kreisscheibenförmigen Segmente 25, 26 des Grundkörpers 6 übergreifen dann an den Rand angrenzende innen- und außenanliegende Wandsegmente der Tür, wodurch der Betätigerkopf 8 gegen ein Herauslösen aus der Tür gesichert ist.

Figur 7 zeigt eine Variante der Ausführungsform gemäß Figur 6. Der Betätiger 3 gemäß Figur 7 weist denselben Aufbau wie der Betätiger 3 gemäß Figur 6 auf, jedoch ist zusätzlich an der dem Betätigerkopf 8 abgewandten Stirnseite des Grundkörpers 6 ein Griffelement 28 vorgesehen, mit dem eine Person die Tür öffnen und schließen kann.

Figur 8 zeigt ein weiteres Ausführungsbeispiel des erfindungsgemäßen Betätigers 3 mit einem Grundkörper 6, einem zylindrischen Verbindungselement 7 und einem kugelförmigen Betätigerkopf 8.

Der Grundkörper 6 ist in diesem Fall von einem Nutenstein 29 gebildet. Ein Transponder 10 kann im Betätigerkopf 8 oder im Nutenstein 29 integriert sein.

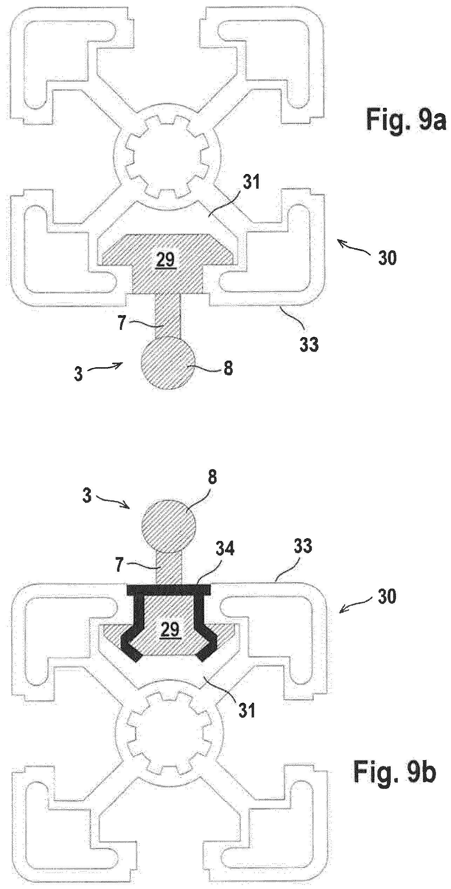

Der als Nutenstein 29 ausgebildete Grundkörper 6 kann in einem Profil 30 einfach dadurch integriert werden, indem er in eine Profilnut 31 des Profils 30 eingesetzt wird (Figur 9a) und dort mit einer nicht dargestellten Madenschraube, die in eine Bohrung 32 des Nutensteins 29 greift, fixiert wird.

Wie Figur 9a zeigt, ist der Nutenstein 29 so in der Profilnut 31 gelagert, dass die Stirnseite des Nutensteins 29, an dem das Verbindungselement 7 ausmündet, gegenüber der Außenseite 33 des Profils 30 nach innen versetzt gelagert ist.

Damit kann, wie Figur 9b zeigt, eine Profilnutabdeckung 34 auf den Nutenstein 29 so aufgesetzt werden, dass diese den Nutenstein 29 abdeckt und bündig mit der Außenseite des Profils 30 abschließt. Damit ragt nur das Verbindungselement 7 mit dem Betätigerkopf 8 über die Profilnutabdeckung 34 nach außen hervor.

### Bezugszeichenliste

- (1): Sicherheitsschalteranordnung
- (2): Sicherheitsschalter
- (3): Betätiger
- (4): Gehäuse
- (4a): Frontwand
- (5): Kabelanschluss
- (6): Grundkörper
- (7): Verbindungselement
- (8): Betätigerkopf
- (9): Führung
- (10): Transponder
- (11): Lesespule
- (12): Verriegelungseinheit
- (13): Führungskanal
- (14): Verriegelungsbacke
- (15): Federeinheit
- (16): Reflexionslichtschranke
- (17): Zuhalteeinheit
- (18): Kulisse
- (19): Zahnung
- (20): Zahnrad
- (21): Elektromotor
- (22): Hilfsentriegelung
- (23): Segmente
- (24): Zwischensegment
- (25): kreisscheibenförmiges Segment
- (26): kreisscheibenförmiges Segment
- (27): zylindrisches Segment
- (28): Griffelement
- (29): Nutenstein
- (30): Profil
- (31): Profilnut
- (32): Bohrung
- (33): Außenseite
- (34): Profilnutabdeckung
- (A): Einführöffnung

## Patentansprüche

1. Betätiger (3) für einen Sicherheitsschalter (2) mit einem Betätigerkopf (8), der mittels eines Verbindungselements (7) an einem Grundkörper (6) gelagert ist, wobei der Betätigerkopf (8) wenigstens abschnittsweise einen größeren Querschnitt als das Verbindungselement (7) aufweist, wobei das Verbindungselement (7) in axialer Richtung steif ist und der Betätigerkopf (8) mittels des Verbindungselements (7) in einer Grundstellung gehalten ist, in welcher die Längsachse des Verbindungselements (7) in einem Neigungswinkel zur Oberfläche des Grundkörpers (6) verläuft, **dadurch gekennzeichnet, dass** das Verbindungselement (7) aus einem elastisch verformbaren Material besteht und bei äußeren Krafteinwirkungen quer zur Längsachse des Verbindungselements auslenkbar ist, wodurch der Betätiger bei Heranführen an den Sicherheitsschalter (2) auf eine Verriegelungseinheit (12) des Sicherheitsschalters (2) zentriert werden kann und dass entweder der Grundkörper (6) eine Aufnahme ausbildet, mittels derer der Betätiger (3) in oder an einer Tür einbaubar ist, oder der Grundkörper (6) ein Nutenstein (29) ist, welcher in einem Profil (30) integrierbar ist.

2. Betätiger (3) nach Anspruch 1, **dadurch gekennzeichnet, dass** der Betätigerkopf (8) ein rotationssymmetrisch zur Längsachse des Verbindungselements (7) ausgebildeter Körper ist.

3. Betätiger (3) nach Anspruch 2, **dadurch gekennzeichnet, dass** der Betätigerkopf (8) kugelförmig ausgebildet ist oder einen ovalen oder polygonalen Querschnitt aufweist.

4. Betätiger (3) nach einem der Ansprüche 1 bis 3, **dadurch gekennzeichnet, dass** das Verbindungselement (7) einen über seine gesamte Länge zumindest näherungsweise konstanten Querschnitt aufweist.

5. Betätiger (3) nach einem der Ansprüche 1 bis 4, **dadurch gekennzeichnet, dass** das Verbindungselement (7) aus einem metallischen Werkstoff besteht, wobei insbesondere das Verbindungselement (7) von einem Stahlseil gebildet ist.

6. Betätiger (3) nach einem der Ansprüche 1 bis 5, **dadurch gekennzeichnet, dass** in der Grundstellung die Längsachse des Verbindungselements (7) längs einer senkrecht zur Oberfläche des Grundkörpers (6) orientierten Geraden verläuft.

7. Betätiger (3) nach einem der Ansprüche 1 bis 6, **dadurch gekennzeichnet, dass** die Länge des Verbindungselements (7) einstellbar ist.

8. Betätiger (3) nach einem der Ansprüche 1 bis 7, **dadurch gekennzeichnet, dass** der Grundkörper (6) zwei durch ein zylindrisches Segment (27) verbundene kreisscheibenförmige Segmente (25, 26) aufweist, welche über das zylindrische Segment (27) hervorstehen.

9. Betätiger (3) nach einem der Ansprüche 1 bis 8, **dadurch gekennzeichnet, dass** das Verbindungselement (7) mit dem Betätigerkopf (8) von einer ersten Stirnseite des Grundkörpers (6) hervorsteht, und dass an der gegenüberliegenden Stirnseite des Grundkörpers (6) ein Griffelement (28) angeordnet ist.

10. Sicherheitsschalteranordnung (1) mit einem Sicherheitsschalter (2) und einem Betätiger (3) nach einem der Ansprüche 1 bis 8, **dadurch gekennzeichnet, dass** der Sicherheitsschalter (2) eine Verriegelungseinheit (12) aufweist, mittels derer der Betätiger (3) in einer Verriegelungsstellung haltbar ist.

11. Sicherheitsschalteranordnung (1) nach Anspruch 10, **dadurch gekennzeichnet, dass** die Verriegelungseinheit (12) eine Anordnung von Verriegelungsbacken (14) aufweist, die eine Einführöffnung (A) begrenzen, über welche der Betätigerkopf (8) in eine Verriegelungsstellung einbringbar ist, wobei die Verriegelungsbacken (14) in Verriegelungspositionen den Betätigerkopf (8) des in der Verriegelungsstellung angeordneten Betätigers (3) hintergreifen und den Betätiger (3) in der Verriegelungsstellung halten, und dass bei Passieren der Verriegelungsbacken (14) der Betätigerkopf (8) die Verriegelungsbacken (14) aus der Verriegelungsposition auslenkt.

12. Sicherheitsschalteranordnung (1) nach Anspruch 11, **dadurch gekennzeichnet, dass** der Betätigerkopf (8) durch eine Auslenkbewegung selbsttätig auf die Einführöffnung (A) selbsttätig ausrichtbar ist.

13. Sicherheitsschalteranordnung (1) nach einem der Ansprüche 10 bis 12, **dadurch gekennzeichnet, dass** der Sicherheitsschalter (2) eine der Verriegelungseinheit (12) zugeordneten Zuhalteeinheit (17) aufweist, mittels derer eine Zuhaltung für den Betätiger (3) in der Verriegelungsstellung bewirkt ist.

14. Sicherheitsschalteranordnung (1) nach einem der Ansprüche 10 bis 13, **dadurch gekennzeichnet, dass** die Verriegelungsstellung des Betätigers (3) dadurch überwacht ist, dass Signale eines Transponders (10) im Betätiger (3) in einer Leseeinheit des Sicherheitsschalters (2) erfasst werden, wobei der Transponder (10) im Betätigerkopf (8) oder im Grundkörper (6) integriert ist.

## Claims

1. Actuator (3) for a safety switch (2) with an actuator head (8), which is mounted at a base body (6) by means of a connecting element (7), wherein the actuator head (8) has at least in a section a greater cross-section than the connecting element (7), wherein the connecting element (7) is stiff in axial direction and the actuator head (8) is held by means of the connecting element (7) in a basic setting in which the longitudinal axis of the connecting element (7) extends at an angle of inclination to the surface of the base body (6), **characterised in that** the connecting element (7) consists of a elastically deformable material and in the case of external applications of force is deflectable transversely to the longitudinal axis of the connecting element, whereby the actuator on approach to the safety switch (2) can be centred on a locking unit (12) of the safety switch (2), and that either the base body (6) forms a receptacle by means of which the actuator (3) can be installed in or at a door or the base body (6) is a groove block (29) in which a profile can be integrated.

2. Actuator (3) according to claim 1, **characterised in that** the actuator head (8) is a body formed to be rotationally symmetrical with respect to the longitudinal axis of the connecting element (7).

3. Actuator (3) according to claim 2, **characterised in that** the actuator head (8) is of spherical configuration or has an oval or polygonal cross-section.

4. Actuator (3) according to any one of claims 1 to 3, **characterised in that** the connecting element (7) has a cross-section which is at least approximately constant over its entire length.

5. Actuator (3) according to any one of claims 1 to 4, **characterised in that** the connecting element (7) consists of a metallic material, wherein, in particular, the connecting element (7) is formed by a steel cable.

6. Actuator (3) according to any one of claims 1 to 5, **characterised in that** in the basic setting the longitudinal axis of the connecting element (7) extends along a straight line oriented perpendicularly to the surface of the base body (6).

7. Actuator (3) according to any one of claims 1 to 6, **characterised in that** the length of the connecting element (7) is settable.

8. Actuator (3) according to any one of claims 1 to 7, **characterised in that** the base body (6) comprises two discoid segments (25, 26) which are connected by a cylindrical segment (27) and which project beyond the cylindrical segment (27).

9. Actuator (3) according to any one of claims 1 to 8, **characterised in that** the connecting element (7) together with the actuator head (8) projects from a first end face of the base body (6) and a grip element (28) is arranged at the opposite end face of the base body (6).

10. Safety switch arrangement (1) with a safety switch (2) and an actuator (3) according to any one of claims 1 to 8, **characterised in that** the safety switch (2) comprises a locking unit (12), by means of which the actuator (3) can be held in a locking setting.

11. Safety switch arrangement (1) according to claim 10, **characterised in that** the locking unit (12) comprises an arrangement of locking jaws (14) bounding an entry opening (A) by way of which the actuator head (8) can be brought into a locking setting, wherein the locking jaws (14) in locking positions engage behind the actuator head (8) of the actuator (3) arranged in the locking setting and hold the actuator (3) in the locking setting and that when the locking jaws (14) are passed the actuator head (8) deflects the locking jaws (14) out of the locking position.

12. Safety switch arrangement (1) according to claim 11, **characterised in that** the actuator head (8) can by a deflecting movement be automatically aligned with the entry opening (A).

13. Safety switch arrangement (1) according to any one of claims 10 to 12, **characterised in that** the safety switch (2) comprises a retaining unit (17) which is associated with the locking unit (12) and by means of which retention for the actuator (3) in the locking setting is produced.

14. Safety switch arrangement (1) according to any one of claims 10 to 13, **characterised in that** the locking setting of the actuator (3) is monitored by signals of a transponder (10) in the actuator (3) being detected in a reader unit of the safety switch (2), wherein the transponder (10) is integrated in the actuator head (8) or in the base body (6).

## Revendications

1. Actionneur (3) pour un interrupteur de sécurité (2) avec une tête d'actionneur (8) qui est montée au moyen d'un élément de connexion (7) sur un corps de base (6), dans lequel la tête d'actionneur (8) présente au moins par endroits une section transversale plus grande que l'élément de connexion (7), dans lequel l'élément de connexion (7) est rigide dans la direction axiale et la tête d'actionneur (8) est maintenue au moyen de l'élément de connexion (7) dans une position de base dans laquelle l'axe longitudinal de l'élément de connexion (7) s'étend selon un angle d'inclinaison par rapport à la surface du corps de base (6), **caractérisé en ce que** l'élément de connexion (7) est constitué d'un matériau élastique déformable et peut être dévié lors d'actions de forces externes transversalement à l'axe longitudinal de l'élément de connexion, de sorte que l'actionneur peut être centré lors de l'approche de l'interrupteur de sécurité (2) sur une unité de verrouillage (12) de l'interrupteur de sécurité (2), et **en ce que** soit le corps de base (6) forme un logement au moyen duquel un élément de base (3) peut être monté dans ou au niveau d'une porte, ou le corps de base (6) est un coulisseau (29) qui peut être intégré dans un profilé (30).

2. Actionneur (3) selon la revendication 1, **caractérisé en ce que** la tête d'actionneur (8) est un corps réalisé avec une symétrie de rotation par rapport à l'axe longitudinal de l'élément de connexion (7).

3. Actionneur (3) selon la revendication 2, **caractérisé en ce que** la tête d'actionneur (8) est de forme sphérique ou présente une section transversale ovale ou polygonale.

4. Actionneur (3) selon l'une quelconque des revendications 1 à 3, **caractérisé en ce que** l'élément de connexion (7) présente une section transversale au moins approximativement constante sur toute sa longueur.

5. Actionneur (3) selon l'une quelconque des revendications 1 à 4, **caractérisé en ce que** l'élément de connexion (7) est constitué d'un matériau métallique, l'élément de connexion (7) étant formé en particulier par un câble en acier.

6. Actionneur (3) selon l'une quelconque des revendications 1 à 5, **caractérisé en ce que**, dans la position de base, l'axe longitudinal de l'élément de connexion (7) s'étend le long d'une droite orientée perpendiculairement à la surface du corps de base (6).

7. Actionneur (3) selon l'une quelconque des revendications 1 à 6, **caractérisé en ce que** la longueur de l'élément de connexion (7) est réglable.

8. Actionneur (3) selon l'une quelconque des revendications 1 à 7, **caractérisé en ce que** le corps de base (6) présente deux segments en forme de disque circulaire (25, 26) connectés par un segment cylindrique (27), qui font saillie par rapport au segment cylindrique (27).

9. Actionneur (3) selon l'une quelconque des revendications 1 à 8, **caractérisé en ce que** l'élément de connexion (7) avec la tête d'actionneur (8) fait saillie à partir d'une première face frontale du corps de base (6), et **en ce qu'**un élément de préhension (28) est agencé sur la face frontale opposée du corps de base (6).

10. Ensemble d'interrupteur de sécurité (1) comprenant un interrupteur de sécurité (2) et un actionneur (3) selon l'une quelconque des revendications 1 à 8, **caractérisé en ce que** l'interrupteur de sécurité (2) présente une unité de verrouillage (12) au moyen de laquelle l'actionneur (3) peut être maintenu dans une position de verrouillage.

11. Ensemble d'interrupteur de sécurité (1) selon la revendication 10, **caractérisé en ce que** l'unité de verrouillage (12) présente un agencement de mâchoires de verrouillage (14) qui délimitent une ouverture d'introduction (A) par l'intermédiaire de laquelle la tête d'actionneur (8) peut être amenée dans une position de verrouillage, dans lequel les mâchoires de verrouillage (14), dans des positions de verrouillage, viennent en prise derrière la tête d'actionneur (8) de l'actionneur (3) agencé dans la position de verrouillage et maintiennent l'actionneur (3) dans la position de verrouillage, et dans lequel lors du passage des mâchoires de verrouillage (14), la tête d'actionneur (8) écarte les mâchoires de verrouillage (14) en dehors de la position de verrouillage.

12. Ensemble d'interrupteur de sécurité (1) selon la revendication 11, **caractérisé en ce que** la tête d'actionneur (8) peut être orientée automatiquement vers l'ouverture d'introduction (A) par un mouvement de déviation.

13. Ensemble d'interrupteur de sécurité (1) selon l'une quelconque des revendications 10 à 12, **caractérisé en ce que** l'interrupteur de sécurité (2) présente une unité de maintien (17) associée à l'unité de verrouillage (12), au moyen de laquelle un maintien de l'actionneur (3) dans la position de verrouillage est mis en oeuvre.

14. Ensemble d'interrupteur de sécurité (1) selon l'une quelconque des revendications 10 à 13, **caractérisé en ce que** la position de verrouillage de l'actionneur (3) est commandé via des signaux d'un transpondeur (10) dans l'actionneur (3) qui sont détectés dans une unité de lecture de l'interrupteur de sécurité (2), le transpondeur (10) étant intégré dans la tête d'actionneur (8) ou dans le corps de base (6).
